# FASCICULE DE BREVET EUROPEEN

(11) **EP 1 368 570 B1**
(45) Date de publication et mention de la délivrance du brevet: **13.12.2006**
(21) Numéro de dépôt: 02720055.9
(22) Date de dépôt: 12.03.2002
(51) Int. Cl.: F16C 11/06

(54) **DISPOSITIF DE SUPPORT POUR UN ECRAN PLAT A CRISTAUX LIQUIDES**
HALTEVORRICHTUNG FÜR LCD-FLACHBILDSCHIRME
SUPPORT DEVICE FOR A LIQUID CRYSTAL FLAT SCREEN

(30) Priorité: 12.03.2001 FR 0103327
(43) Date de publication de la demande: 10.12.2003
(73) Titulaire: ID - Industrie + Design, F-75011 Paris (FR)
(72) Inventeur: RUDOLF, Alain, F-94100 Saint Maur des Fosses (FR)
(74) Mandataire: Bezault, Jean
(86) Numéro de dépôt international: PCT/FR2002/000877
(87) Numéro de publication internationale: WO 2002/073047

(56) Documents cités:
- EP-A- 0 795 716
- DE-A- 2 840 314
- FR-A- 2 273 189
- FR-A- 2 548 746
- US-A- 5 092 552
- PATENT ABSTRACTS OF JAPAN vol. 1996, no. 05, 31 mai 1996 (1996-05-31) & JP 08 022253 A (NEC CORP.), 23 janvier 1996 (1996-01-23)

## Description

L'invention se rapporte aux équipements de bureau, notamment aux équipements informatiques.

Elle concerne plus particulièrement un dispositif de support pour un écran plat à cristaux liquides, en particulier pour poste informatique.

On sait que les écrans plats à cristaux liquides sont de plus en plus utilisés dans les postes informatiques, en particulier ceux destinés aux établissements bancaires, salles de marchés, et analogues.

En effet, en raison de leur faible encombrement et du confort visuel qu'ils procurent à l'utilisateur, ces écrans plats remplacent avantageusement les écrans cathodiques traditionnels.

On connaît déjà du document JP 08022253 A un dispositif de support pour écran plat à cristaux liquides, qui comprennent un bras, ainsi qu'un mécanisme d'articulation interposé entre le bras et l'écran.

Dans les dispositifs connus de ce genre, le bras est habituellement relié à une structure porteuse et il est généralement composé de plusieurs éléments articulés entre eux. Ce bras en plusieurs éléments est souvent encombrant et il nécessite l'emploi d'une structure porteuse résistante qui génère aussi de l'encombrement sur le poste où elle est placée.

Le mécanisme d'articulation est destiné à procurer une articulation multi-directionnelle ou universelle pour offrir une multitude de possibilités de réglage à l'écran plat.

Dans les dispositifs connus de ce genre, le mécanisme d'articulation appartient généralement à deux types principaux.

Dans un premier type, le mécanisme d'articulation est composé d'organes d'articulation successifs à un seul axe d'articulation, montés de sorte que leurs axes d'articulation respectifs soient mutuellement décalés.

Dans un second type, le mécanisme comprend une rotule sphérique maintenue en sandwich entre deux anneaux rappelés élastiquement l'un vers l'autre.

Ces mécanismes d'articulation connus sont souvent complexes et coûteux à réaliser. En outre, ils doivent être adaptés, à chaque fois au type d'écran plat à supporter, notamment pour tenir compte du poids de celui-ci. Enfin, ils sont généralement encombrants, difficiles à régler, et donc peu compatibles avec les écrans plats à cristaux liquides.

L'invention a notamment pour but de surmonter les inconvénients précités.

Elle vise principalement à procurer un dispositif de support pour un écran plat à cristaux liquides qui possède un mécanisme d'articulation de structure simple, robuste et peu encombrante, pouvant être réalisé facilement et à un coût réduit.

L'invention vise aussi à procurer un tel dispositif de support dont le mécanisme d'articulation autorise un réglage aisé de l'écran plat dans une multiplicité de positions possibles, et sans que l'écran plat puisse perdre ensuite sa position de réglage, malgré le couple de rappel exercé par l'écran plat.

Elle vise encore à procurer un tel dispositif de support qui est compatible avec une large gamme d'écrans plats à cristaux liquides.

L'invention propose à cet effet un dispositif de support du type défini en introduction, dans lequel le mécanisme d'articulation comprend une rotule présentant une surface de forme générale hémisphérique et propre à être fixée à l'écran, une cage définissant un logement pour recevoir la rotule et présentant une bordure annulaire venant en contact de frottement avec la rotule, un tirant interposé entre la cage et la rotule, en prenant appui sensiblement au centre de la rotule, pour exercer une force élastique de rappel de valeur choisie qui sollicite la rotule en appui contre la bordure annulaire de la cage, ainsi qu'un passage de tirant constitué par un évidement élargi aménagé dans la rotule en débouchant sur la surface hémisphérique de la rotule pour autoriser un débattement du tirant dans la rotule, quelle que soit la position de la rotule par rapport à la cage.

Ainsi, contrairement aux mécanismes d'articulation classiques où la rotule est une sphère maintenue en sandwich entre deux anneaux sollicités l'un vers l'autre, la rotule de l'invention a sensiblement la forme d'une demi-sphère et elle est reçue dans une cage qui présente une bordure annulaire contre laquelle vient frotter la rotule.

Le tirant interposé entre la cage et la rotule, exerce une force de rappel élastique qui prend appui sensiblement au centre de la rotule et s'étend suivant un axe passant pratiquement au centre de la rotule.

Comme le tirant traverse un passage élargi, la distance entre ses deux points d'accrochage reste constante et l'effort de traction reste constant, quelle que soit la position de la rotule par rapport à la cage.

La rotule est ainsi sollicitée axialement pour venir en appui contre la bordure annulaire de la cage, c'est-à-dire contre une surface limitée, ce qui augmente d'autant la force et la pression de contact. On procure ainsi un serrage qui s'effectue essentiellement dans l'axe.

De plus la rotule de forme générale hémisphérique de l'invention peut avoir un diamètre plus grand que celui d'une rotule classique de forme sphérique.

Il en résulte que la rotule procure une articulation multi-directionnelle ou universelle et que, une fois réglée en position, elle ne risque pas de se déplacer par rapport à la cage, malgré le couple de rappel exercé par l'écran plat qui est monté en porte-à-faux.

Selon une autre caractéristique de l'invention, la rotule et la cage sont formées chacune en une matière à forte résistance mécanique et à fort coefficient de frottement.

Dans une forme de réalisation préférée, la rotule et la cage sont formées chacune en une matière plastique du type polycarbonate. Elles peuvent ainsi être facilement réalisées par moulage.

Le tirant traverse la rotule et la cage et il comporte une première butée d'extrémité prenant appui sensiblement au centre de la rotule et une deuxième butée d'extrémité prenant appui à l'extérieur de la cage.

Selon une autre caractéristique de l'invention, la rotule comporte un logement servant à la réception de la première butée d'extrémité, qui débouche sur une face postérieure de la rotule, et qui communique avec le passage de tirant.

Le passage du tirant présente, de préférence, une forme généralement conique avec une ouverture étroite communiquant avec le logement de butée et une ouverture large débouchant sur la surface hémisphérique de la rotule.

Ceci permet d'assurer une grande amplitude de mouvement de la rotule par rapport à la cage.

Selon une autre caractéristique de l'invention, la deuxième extrémité du tirant comporte une partie filetée munie d'un écrou de réglage et traversant un ressort qui prend appui contre un anneau d'appui disposé à l'extérieur de la cage.

Avantageusement, le tirant comprend un câble souple, de préférence un câble métallique multibrin.

La rotule comprend avantageusement des pattes radiales pour sa fixation sur la face arrière d'un écran plat.

Selon encore une autre caractéristique de l'invention, le bras comprend un tube creux formant passage axial pour le tirant et présentant une première extrémité solidarisée à un manchon issu de la cage et une deuxième extrémité portant un appui pour les moyens de traction.

Dans la description qui suit, faite seulement à titre d'exemple, on se réfère aux dessins annexés, sur lesquels :
- la Figure 1 est une vue en perspective d'un dispositif de support pour un écran plat à cristaux liquides selon l'invention ;
- la Figure 2 est une vue en coupe, prise dans l'axe du bras en forme de tube, du dispositif de la Figure 1 ;
- la Figure 3 est une vue de face de l'étrier faisant partie de la structure porteuse ;
- la Figure 4 est une vue en coupe du dispositif, le tube étant représenté en position télescopée ;
- les Figures 5 à 7 sont des vues en coupe partielle, analogues à la Figure 2, montrant trois positions différentes de la rotule ;
- la Figure 8 est une vue de face d'une coquille faisant partie de l'étrier du dispositif de l'invention ;
- la Figure 9 est une vue de dessus correspondant à la Figure 8 ; et
- la Figure 10 est une vue en coupe axiale d'une rotule dans une autre forme de réalisation de l'invention.

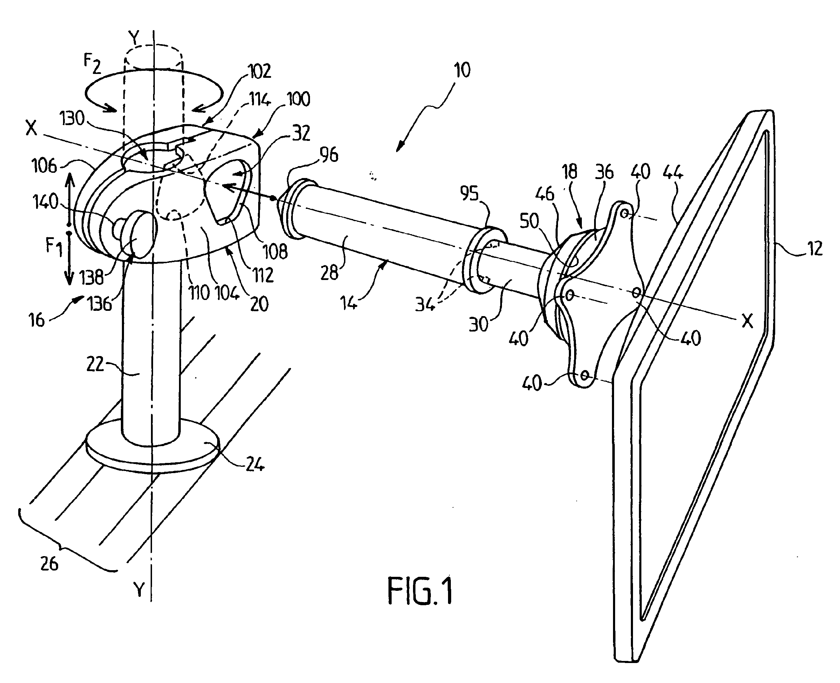

On se réfère d'abord à la Figure 1 qui représente un dispositif 10 destiné à supporter un écran plat 12, du type à cristaux liquides, tel que ceux utilisés, par exemple, dans les postes informatiques.

Le dispositif 10 comprend un bras 14, formant potence, disposé dans une position sensiblement horizontale en étant supporté par une structure porteuse 16. Un mécanisme d'articulation 18 est interposé entre le bras 14 et l'écran 12.

La structure porteuse 16 comprend un étrier 20, encore appelé sabot, qui peut coulisser verticalement (double flèche F1) le long d'un mât vertical 22 réalisé ici sous la forme d'un tube à paroi cylindrique circulaire. Le mât 22 comprend une embase 24 propre à être fixée, de préférence de manière réglable, sur un poste, par exemple un pupitre informatique.

Dans l'exemple, l'embase 24 est réglable en position le long d'un rail horizontal 26 (représenté schématiquement) que comporte ledit poste informatique.

Le bras 14 est réalisé ici sous la forme d'un tube télescopique qui comprend une première partie tubulaire 28, dans l'exemple de forme cylindrique circulaire, et une deuxième partie tubulaire 30, également de forme cylindrique circulaire, susceptible de coulisser à l'intérieur de la partie tubulaire 28.

La partie tubulaire 28 est propre à coulisser axialement et à tourner librement dans un passage horizontal 32 d'axe XX que définit l'étrier 20. Ainsi, la partie tubulaire 28 peut être réglée dans une position axiale et angulaire donnée par rapport à l'étrier 20. Celui-ci est en outre réglable dans une position angulaire donnée par rapport au mât 22, comme représenté par la flèche F2.

De surcroît, la partie tubulaire 30 peut être réglée axialement par rapport à la partie 28, ce qui permet de modifier la distance entre l'écran 12 et l'étrier, et cela avec une amplitude importante compte tenu du caractère télescopique du bras 14.

De préférence, les parties tubulaires 28 et 30 comprennent des moyens de blocage mutuel en rotation, et cela pour éviter que la partie tubulaire 30 ne puisse tourner par rapport à la partie tubulaire 28 sous l'effet d'un couple de rotation produit par l'écran 12 lorsque celui-ci se trouve dans une position inclinée en porte-à-faux.

Ces moyens de blocage mutuel sont avantageusement des moyens du type à rainure, comme représenté schématiquement en 34 sur la Figure 1.

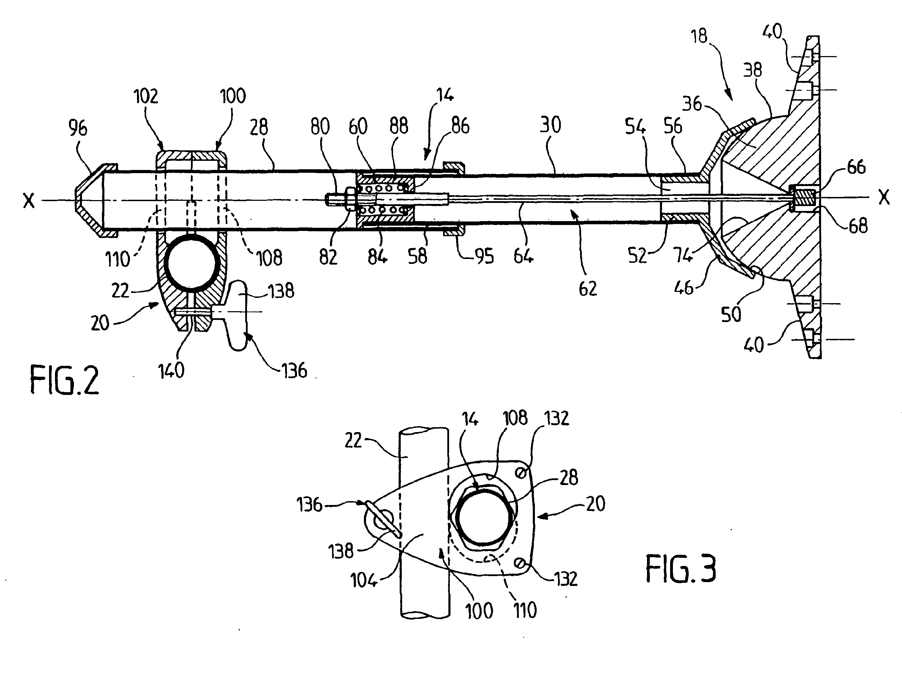

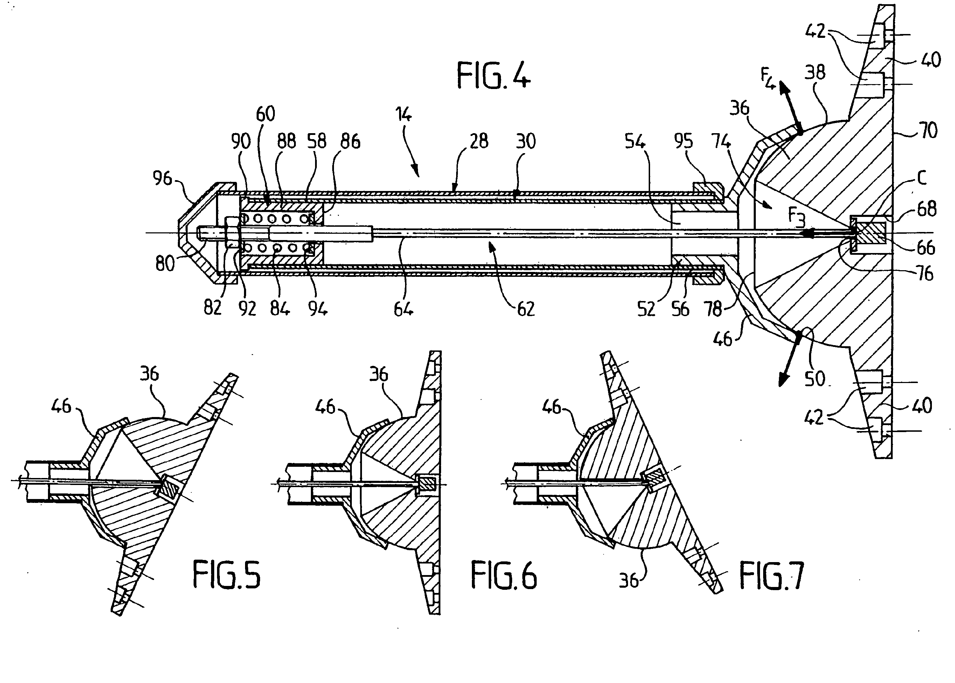

Le mécanisme d'articulation 18 sera décrit maintenant en référence particulière aux Figures 2 et 4. Sur la Figure 2, le bras 14 (tube télescopique) est représenté en position déployée, tandis que, sur la Figure 4, ce bras est représenté en position rétractée.

Le mécanisme d'articulation 18 comprend une rotule 36 qui présente une surface hémisphérique 38 de centre C (Figure 4). La rotule 36 se prolonge par quatre pattes radiales 40 que l'on voit mieux sur la Figure 1. Ces quatre pattes sont disposées à 90' les unes des autres et elles comportent chacune deux perçages 42 pour permettre de fixer la rotule 36 sur une face postérieure 44 de l'écran. Cette dernière est munie de quatre perçages appropriés (non représentés) selon la normalisation VESA. L'existence de deux perçages 42 sur chacune des pattes 40 permet d'adapter la rotule à des écrans de tailles différentes.

La rotule 36 proprement dite est reçue dans un logement interne défini par la cage 46. Toutefois, la surface intérieure de la cage ne constitue pas une surface homologue de la surface hémisphérique 38. Au contraire, la cage vient au contact de la surface hémisphérique 38 seulement par une bordure annulaire interne 50 qui forme ainsi une surface de contact annulaire et étroite. La cage 46 se prolonge par un manchon 52 qui définit un passage cylindrique axial 54.

La partie tubulaire 30 du bras 14 comprend une première extrémité 56 qui vient s'adapter autour du manchon 52 et une seconde extrémité 58 qui reçoit intérieurement un appui 60, dont la structure sera décrite plus loin.

La rotule 18 et la cage 46 sont formées chacune en une matière à forte résistance mécanique et à fort coefficient de frottement. A ce titre, il est avantageux que la rotule et la cage soient formées chacune en une matière plastique appropriée, et en particulier du type polycarbonate. La rotule 38 et la cage 46 peuvent être ainsi réalisées facilement par moulage de cette matière plastique particulière.

Conformément à l'invention, le dispositif comprend, en outre, des moyens de traction 62 interposés entre la cage et la rotule pour exercer une force élastique de rappel, de valeur choisie, qui sollicite la rotule 38 en appui contre la bordure annulaire 50 de la cage. De la sorte, et compte tenu du fort coefficient de frottement de la matière utilisée, la rotule et la cage sont sollicitées élastiquement l'une contre l'autre, ce qui permet une immobilisation de la rotule, en une orientation choisie, par rapport à la cage.

Dans la forme de réalisation représentée, les moyens de traction 62 comprennent un tirant 64 qui, dans l'exemple, est un câble souple, à savoir un câble métallique multibrin. Ce tirant 64 traverse la rotule et la cage et il comporte une première butée d'extrémité 66, ici de forme générale cylindrique circulaire, qui prend appui sensiblement au centre C de la rotule.

A cet effet, la rotule 38 comporte un logement cylindrique 68 servant à la réception de la butée 66 et débouchant sur une face postérieure 70 de la rotule. Ce logement 68 communique avec un passage 74 de forme tronconique qui sert au passage du tirant et qui débouche sur la surface hémisphérique 38 de la rotule. Ce passage 74 présente une forme'générale conique et il comporte une ouverture étroite 76 qui communique avec le logement de butée 68 et une ouverture large 78, de forme circulaire, qui débouche sur la surface hémisphérique de la rotule.

Le tirant 64 comporte une seconde butée d'extrémité 80 qui est reçue dans l'appui 60, à l'extérieur de la cage. A cet effet, l'extrémité du tirant est réalisée sous la forme d'une partie filetée munie d'un écrou de réglage 82 et traversée par un ressort hélicoïdal 84, lequel prend appui contre un anneau d'appui 86 faisant partie de l'appui 60.

Plus particulièrement, cet appui 60 comprend un manchon 88 terminé par une collerette 90 et dont le fond est constitué par l'anneau d'appui 86 précité. Le ressort 84 est disposé entre deux rondelles : une rondelle 92 située contre l'écrou 82 et une rondelle 94 située contre l'anneau d'appui 86.

On comprendra que l'on peut ainsi régler la force axiale F3 qui s'exerce sur la rotule et, par conséquent, la force latérale F4 qui s'exerce contre la bordure annulaire 50 (Figure 4). Ce réglage est obtenu par un choix judicieux de la raideur du ressort et par un réglage approprié de la position axiale de l'écrou 82.

La conjonction de ce réglage et du choix des matières constituant la rotule et la cage permet de réaliser un frottement important entre la rotule et la cage, ce qui permet d'immobiliser la rotule en une orientation choisie et de conserver cette orientation, en dépit du poids exercé par l'écran 12.

On remarquera que la partie tubulaire 28 du bras est terminée, d'un côté, par une bague 95 qui coulisse à l'intérieur de la partie tubulaire 30 et, du côté opposé, par un capuchon 96 de forme conique. Ce capuchon cache l'accès à l'écrou de réglage et constitue en outre une butée empêchant au bras 14 de s'échapper de l'étrier 20.

Comme on peut le voir sur les Figures 5 à 7, la rotule 36 (donc l'écran 12) peut prendre une infinité d'orientations. Dans tous les cas, l'effort de traction exercé sur la rotule s'applique sensiblement au centre de cette dernière et dans l'axe du bras. Compte tenu de la forme tronconique du passage de tirant 74, la rotule peut avoir une amplitude de mouvement importante. Ceci permet une infinité de positions ou orientations de réglage, en combinaison du fait que le bras 14 est lui-même télescopique et qu'il est porté par un étrier réglable en hauteur et en orientation par rapport au mât 22.

On décrira maintenant la structure de l'étrier 20 en référence particulière aux Figures 1 à 3 et 8 et 9.

L'étrier 20 comprend deux parties ou coquilles 100 et 102 généralement semblables, disposées de part et d'autre du mât 22 et assemblées entre elles, la partie 100 étant située du côté de l'écran 12 et la partie 102 du côté opposé.

Les coquilles 100 et 102 ont des parois respectives 104 et 106 espacées horizontalement et munies respectivement de deux ouvertures alignées 108 et 110 qui définissent le passage horizontal 32 précité d'axe XX.

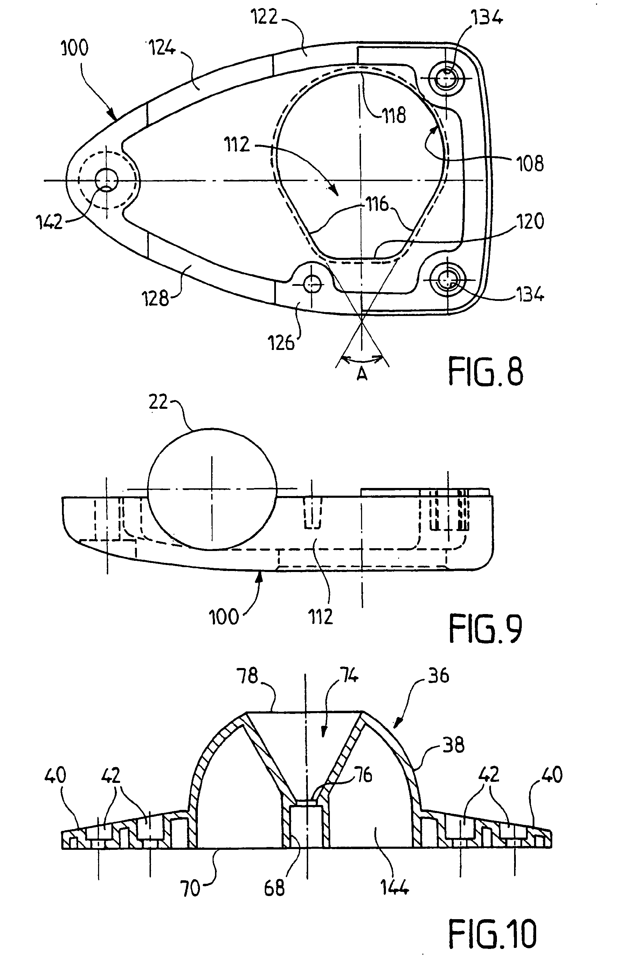

Les deux ouvertures 108 et 110 ont chacune une extrémité en V, à savoir respectivement 112 et 114, ces deux extrémités étant disposées tête-bêche. L'extrémité 112 de l'ouverture 108 est dirigée vers le bas, tandis que l'extrémité 114 de l'ouverture 110 est dirigée vers le haut (voir la Figure 1). Chacune de ces extrémités, par exemple l'extrémité 112, est délimitée par deux bords droits 116 formant entre elles un angle choisi A, typiquement compris entre 50' et 70', dans l'exemple de 60' (Figure 8). Ces deux bords droits 116 se raccordent à un bord 118 en arc de cercle dont le diamètre est légèrement supérieur au diamètre de la partie tubulaire 28 du bras.

Les bords droits 116 de l'ouverture 108 ne forment pas un véritable V, dans la mesure où ils se raccordent entre eux par un bord transversal 120.

Ainsi, la partie tubulaire 28 du bras peut coulisser axialement dans le passage 32 et être immobilisée dans une position axiale et une position angulaire données. De plus, la partie tubulaire 30 peut être déplacée, simplement en coulissement axial, par rapport à la partie tubulaire 28, pour fournir un réglage supplémentaire de l'écran, comme déjà indiqué.

Le blocage en position de la partie tubulaire 28 par rapport à l'étrier s'effectue ainsi par la coopération de la paroi tubulaire de cette partie 28 avec les deux extrémités en V, orientées tête-bêche.

Dans une version simplifiée, il est possible de prévoir que seule l'une des deux ouvertures comprend une extrémité en V.

Chacune des coquilles, par exemple la coquille 100, comprend un bord replié supérieur 122 muni d'une encoche supérieure 124 en arc de cercle, propre à venir en regard d'une encoche supérieure homologue de l'autre coquille, ainsi qu'un bord replié inférieur 126 muni d'une encoche inférieure 128 en arc de cercle, propre à venir en regard d'une encoche inférieure homologue de l'autre coquille.

Ainsi, lorsque les coquilles sont disposées en vis-à-vis, les deux encoches supérieures en vis-à-vis et les deux encoches inférieures en vis-à-vis contribuent à définir un passage cylindrique vertical 130 qui admet un axe YY sensiblement orthogonal à l'axe XX du passage horizontal 32 (Figure 1). Ce passage vertical est conçu pour être traversé par le mât cylindrique vertical 22 décrit précédemment.

Les coquilles 100 et 102 sont généralement semblables et sont avantageusement réalisées par moulage d'une matière métallique.

Elles sont maintenues entre elles par au moins deux vis 132 (Figure 3) qui traversent deux ouvertures circulaires 134 de la coquille 100 et qui viennent coopérer avec des passages filetés homologues de la coquille 102.

L'étrier 20 comprend en outre un organe de blocage 136 du type à vis pour assurer le verrouillage de l'étrier dans une position axiale et angulaire définie. Cet organe 136 comprend un bouton 138 prolongé par une tige filetée 140 qui traverse une ouverture 142 de la coquille 100 et qui coopère avec un passage fileté en vis-à-vis de la coquille 102. Il est à noter que, du fait de l'effort en porte-à-faux exercé par le poids du bras et de l'écran, l'étrier 100 peut s'immobiliser en une position axiale et angulaire choisie par rapport au mât 22, par simple effet de coincement. L'organe de blocage 136 constitue simplement une sécurité pour verrouiller l'étrier en une position choisie par rapport au mât.

La rotule 38 de la Figure 10 diffère de celle décrite précédemment par le fait qu'elle est évidée au lieu d'être massive. Elle comporte en effet un évidement 144 qui débouche sur la face arrière 70. Ceci permet d'alléger la rotule et de faciliter sa réalisation par moulage, sans compromettre sa résistance mécanique compte tenu du matériau utilisé.

On procure ainsi un dispositif de structure simple, peu encombrant, permettant d'assurer une infinité de réglages possibles pour un écran plat à cristaux liquides. Le réglage de l'écran s'effectue simplement par l'utilisateur en agissant directement su l'écran lui-même pour l'amener dans la position souhaitée.

Le dispositif peut ainsi s'implanter facilement sur un poste, en particulier un pupitre informatique.

L'invention n'est pas limitée aux formes de réalisation décrites précédemment à titre d'exemple et elle est susceptible de nombreuses variantes. On comprendra notamment que le mécanisme d'articulation est utilisable avec différents types de bras, réalisés en une ou plusieurs parties.

## Revendications

1. Dispositif de support pour un écran plat (12) à cristaux liquides, en particulier pour poste informatique, du type comprenant un bras (14), ainsi qu'un mécanisme d' articulation (18) interposé entre le bras et l'écran,
**caractérisé en ce que** le mécanisme d'articulation (18) comprend une rotule (36) présentant une surface de forme générale hémisphérique (38) et propre à être fixée à l'écran (12), une cage (46) définissant un logement (48) pour recevoir la rotule et présentant une bordure annulaire (50) venant en contact de frottement avec la rotule, un tirant (64) interposé entre la cage (46) et la rotule (36), en prenant appui sensiblement au centre (C) de la rotule et en s'étendant suivant un axe passant pratiquement au centre de la rotule, pour exercer une force élastique de rappel de valeur choisie qui sollicite la rotule en appui contre la bordure annulaire de la cage, ainsi qu'un passage de tirant (74) constitué par un évidement élargi aménagé dans la rotule (36) en débouchant sur la surface hémisphérique (38) de la rotule pour autoriser un débattement du tirant dans la rotule, quelle que soit la position de la rotule par rapport à la cage.

2. Dispositif selon la revendication 1, **caractérisé en ce que** la rotule (36) et la cage (46) sont formées chacune en une matière à forte résistance mécanique et à fort coefficient de frottement.

3. Dispositif selon la revendication 2, **caractérisé en ce que** la rotule (36) et la cage (46) sont formées chacune en une matière plastique du type polycarbonate.

4. Dispositif selon l'une des revendications 1 à 3, **caractérisé en ce que** le tirant (64) traverse la rotule (36) et la cage (46) et comporte une première butée d'extrémité (66) prenant appui sensiblement au centre (C) de la rotule (36) et une deuxième butée d'extrémité (80, 82) prenant appui à l'extérieur de la cage (46).

5. Dispositif selon la revendication 4, **caractérisé en ce que** la rotule (36) comporte un logement de butée (68) servant à la réception de la première butée (66), qui débouche sur une face postérieure (70) de la rotule, et qui communiqué avec le passage de tirant (74).

6. Dispositif selon la revendication 5, **caractérisé en ce que** le passage de tirant (74) présente une forme généralement conique et présente une ouverture étroite (76) communiquant avec le logement de butée (68) et une ouverture large (78) débouchant sur la surface hémisphérique (38) de la rotule (36).

7. Dispositif selon l'une des revendications 4 à 6, **caractérisé en ce que** la deuxième butée du tirant comporte une partie filetée (80) munie d'un écrou de réglage (82) et traversée par un ressort (84) qui prend appui contre un anneau d'appui (86) disposé à l'extérieur de la cage (46).

8. Dispositif selon l'une des revendications 4 à 7, **caractérisé en ce que** le tirant (64) comprend un câble souple, dé préférence un câble métallique multibrin.

9. Dispositif selon l'une des revendications 1 à 8, **caractérisé en ce que** la rotule (36) comprend des pattes radiales (40) pour sa fixation sur une face arrière (44) de l'écran plat (12).

10. Dispositif selon l'une des revendications 1 à 9, **caractérisé en ce que** le bras (14) comprend un tube creux (30) formant passage axial pour le tirant (64) et présentant une première extrémité (56) solidarisée à un manchon (52) issu de la cage (46) et une deuxième extrémité (58) portant un appui (60) pour le tirant (64).

## Claims

1. Support device for a liquid crystal flat screen (12), in particular for computer workstations, of the type comprising an arm (14) and an articulating mechanism (18) interposed between the arm and the screen, **characterised in that** the articulating mechanism (18) comprises a ball (36) having a general hemispherical shape (38) and adapted to being fixed to the screen (12), a cage (46) defining a housing (48) for receiving the ball and having an annular edge (50) which makes frictional contact with the ball, a tie rod (64) interposed between the cage (46) and the ball (36), while resting substantially at the centre (C) of the ball and extending along an axis passing substantially through the centre of the ball, to exert an elastic restoring force of a selected value which causes the ball to rest against the annular edge of the cage, and a tie rod passage (74) consisting of a widened recess produced in the ball (36) and opening on the hemispherical surface (38) of the ball to allow clearance of the tie rod in the ball, whatever the position of the ball with respect to the cage.

2. Device according to claim 1, **characterised in that** the ball (36) and the cage (46) are each formed from a material with high mechanical strength and a high coefficient of friction.

3. Device according to claim 2, **characterised in that** the ball (36) and the cage (46) are each formed from a plastics material of the polycarbonate type.

4. Device according to any one of claims 1 to 3, **characterised in that** the tie rod (64) passes through the ball (36) and the cage (46) and comprises a first end stop (66) resting substantially in the centre (C) of the ball (36) and a second end stop (80, 82) resting on the outside of the cage (46).

5. Device according to claim 4, **characterised in that** the ball (36) comprises a stop housing (68) serving to receive the first stop (66) which opens onto a rear face (70) of the ball and which communicates with the tie rod passage (74).

6. Device according to claim 5, **characterised in that** the tie rod passage (74) has a generally conical shape and has a narrow aperture (76) communicating with the stop housing (68) and a wide aperture (78) opening on the hemispherical surface (38) of the ball (36) .

7. Device according to any one of claims 4 to 6, **characterised in that** the second tie rod stop comprises a threaded portion (80) provided with an adjusting nut (82) and passed through by a spring (84) which rests against a support ring (86) disposed on the outside of the cage (46).

8. Device according to any one of claims 4 to 7, **characterised in that** the tie rod (64) comprises a flexible cable, preferably a multi-strand metal cable.

9. Device according to any one of claims 1 to 8, **characterised in that** the ball (36) comprises radial lugs (40) to fix it on a rear face (44) of the flat screen (12).

10. Device according to any one of claims 1 to 9, **characterised in that** the arm (14) comprises a hollow tube (30) forming an axial passage for the tie rod (64) and having a first end (56) attached to a sleeve (52) coming from the cage (46) and a second end (58) carrying a support (60) for the tie rod (64).

## Patentansprüche

1. Haltevorrichtung für LCD-Flachbildschirme (12), insbesondere für Computerstationen, von dem Typ mit einem Arm (14), sowie einem Gelenkmechanismus (18), der zwischen dem Arm und dem Bildschirm gesetzt ist,
**dadurch gekennzeichnet, dass** der Gelenkmechanismus (18) ein Kugelgelenk (36), das eine Oberfläche von allgemeiner Halbkugelform (38) aufweist und in der Lage ist, an dem Bildschirm (12) befestigt zu werden, einen Käfig (46), der eine Aufnahme (48) definiert, um das Kugelgelenk aufzunehmen und einen ringförmigen Rand (50) aufweist, der in Reibungskontakt mit dem Kugelgelenk kommt, einen Zuganker (64), der zwischen dem Käfig (46) und dem Kugelgelenk (36) angeordnet ist, und sich im Wesentlichen auf dem Zentrum (C) des Kugelgelenks abstützt und sich entlang einer Achse erstreckt, die praktisch durch das Zentrum des Kugelgelenks geht, um eine elastische Druckkraft von gewählter Größe auszuüben, die das Kugelgelenk in Anlage gegen gelenkförmigen Rand des Käfigs drückt, sowie einen Zuganker-Kanal (74) aufweist, der durch eine vergrößerte Ausnehmung gebildet wird, die in dem Kugelgelenk (36) ausgebildet ist, und an der halbkugelförmigen Oberfläche (38)des Kugelgelenks mündet, um einen Federweg des Zugankers in dem Kugelgelenk, unabhängig von der Position des Kugelgelenks bezüglich des Käfigs zu ermöglichen.

2. Vorrichtung nach Anspruch 1, **dadurch gekennzeichnet, dass** das Kugelgelenk (36) und der Käfig (46) jeweils aus einem stark mechanisch widerstandsfähigen und einen großen Reibungskoeffizienten aufweisenden Material gebildet sind.

3. Vorrichtung nach Anspruch 2, **dadurch gekennzeichnet, dass** das Kugelgelenk (36) und der Käfig (46) jeweils aus einem Kunststoffmaterial vom Typ Polycarbonat gebildet sind.

4. Vorrichtung nach einem der Ansprüche 1 bis 3, **dadurch gekennzeichnet, dass** der Zuganker (64) das Kugelgelenk (36) und den Käfig (46) durchquert, und einen ersten Endanschlag (66), der sich im Wesentlichen am Zentrum (C) des Kugelgelenks (36) abstützt, und einen zweiten Endanschlag (80, 82) aufweist, der sich außen am Käfig (46) abstützt.

5. Vorrichtung nach Anspruch 4, **dadurch gekennzeichnet, dass** das Kugelgelenk (36) eine Anschlagaufnahme (68) aufweist, die zur Aufnahme des ersten Anschlags (66) dient, der an einer hinteren Seite (70) des Kugelgelenks mündet, und der mit dem Zuganker-Kanal (74) in Verbindung steht.

6. Vorrichtung nach Anspruch 5, **dadurch gekennzeichnet, dass** der Zuganker-Kanal (74) eine allgemein konische Form, eine enge Öffnung (76), die mit der Anschlagaufnahme (68) in Verbindung steht, und eine breite Öffnung (78) aufweist, die an der Halbkugeloberfläche (38) des Kugelgelenks (36) mündet.

7. Vorrichtung nach einem der Ansprüche 4 bis 6, **dadurch gekennzeichnet, dass** der zweite Anschlag des Zugankers einen Gewindeabschnitt (80) aufweist, der mit einer Einstellmutter (82) versehen ist, und von einer Feder (84) durchquert wird, die sich gegen einen Anschlagring (86) abstützt, der außen am Käfig (46) angeordnet ist.

8. Vorrichtung nach einem der Ansprüche 4 bis 7, **dadurch gekennzeichnet, dass** der Zuganker (64) ein biegsames Kabel, vorzugsweise ein mehrsträngiges Metallkabel aufweist.

9. Vorrichtung nach einem der Ansprüche 1 bis 8, **dadurch gekennzeichnet, dass** das Kugelgelenk (36) radiale Laschen (40) für seine Befestigung an einer Rückseite (44) des Flachbildschirms (12) aufweist.

10. Vorrichtung nach einem der Ansprüche 1 bis 9, **dadurch gekennzeichnet, dass** der Arm (14) ein hohles Rohr (30) aufweist, das einen axialen Kanal für den Zuganker (64) bildet, und ein erstes Ende (56), das mit einer Muffe (52) aus dem Käfig (46) verbunden ist, und ein zweites Ende (58) aufweist, das einen Anschlag (60) für den Zuganker (64) trägt.
